(19) **Europäisches Patentamt / European Patent Office / Office européen des brevets**

(11) **EP 2 528 036 A1**

(12) # EUROPEAN PATENT APPLICATION
published in accordance with Art. 153(4) EPC

(43) Date of publication:
**28.11.2012 Bulletin 2012/48**

(51) Int Cl.:
*G06T 7/00* (2006.01)  *H04N 13/00* (2006.01)
*G02B 27/22* (2006.01)

(21) Application number: **10835533.0**

(22) Date of filing: **09.12.2010**

(86) International application number:
**PCT/ES2010/070813**

(87) International publication number:
**WO 2011/070211 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2009 ES 200931139**

(71) Applicant: **Universitat de les Illes Balears**
**07071 Palma de Mallorca (ES)**

(72) Inventors:
• **MOREL, Jean-Michel, Henri, Olivier**
**07071 Palma de Mallorca (ES)**

• **COLL VICENS, Bartomeu**
**07071 Palma de Mallorca (ES)**
• **BUADES CAPÓ, Antonio**
**07071 Palma de Mallorca (ES)**
• **ROUGÉ, Bernard, Robert**
**07071 Palma de Mallorca (ES)**
• **BLANCHET, Gwendoline**
**31401 Toulouse (FR)**

(74) Representative: **Ponti Sales, Adelaida et al**
**Oficina Ponti**
**C. Consell de Cent, 322**
**08007 Barcelona (ES)**

(54) **METHOD FOR ESTABLISHING A CORRESPONDENCE BETWEEN A FIRST DIGITAL IMAGE AND A SECOND DIGITAL IMAGE OF THE SAME SCENE IN ORDER TO OBTAIN DISPARITIES**

(57)     Process for matching a first digital image (U1) with a second digital image (U2), comprising the following stages:

a) select from U1 a block B1(x) of a certain shape centred at a pixel x of U1;

b) select from U2 a series of blocks B2(yi) of the same shape as B1(x);

c) calculate for each B2(yi) a distance between B2(yi) and B1 (x) as a sum weighted by f(x,z) of a function of the differences between values associated with the colour of the pixels of the same relative position z;

d) select the pixel yi that minimises the distance between blocks, establishing a correspondence between pixels x and yi, and giving the disparity of x as the difference yi-x,

where f depends on x and z and is a decreasing and non-constant function with respect to the modulus of the directional gradient of U1(x+z) in a certain direction.

Fig. 2

## Description

The present invention relates to a process for matching a first digital image with a second digital image of the same scene to obtain disparities that will avoid the fattening effect.

## BACKGROUND OF THE INVENTION

Numerical stereoscopic methods are based on a pair of images of a single scene for the reconstruction of surface relief using a parallax method, the principle of which is well known.

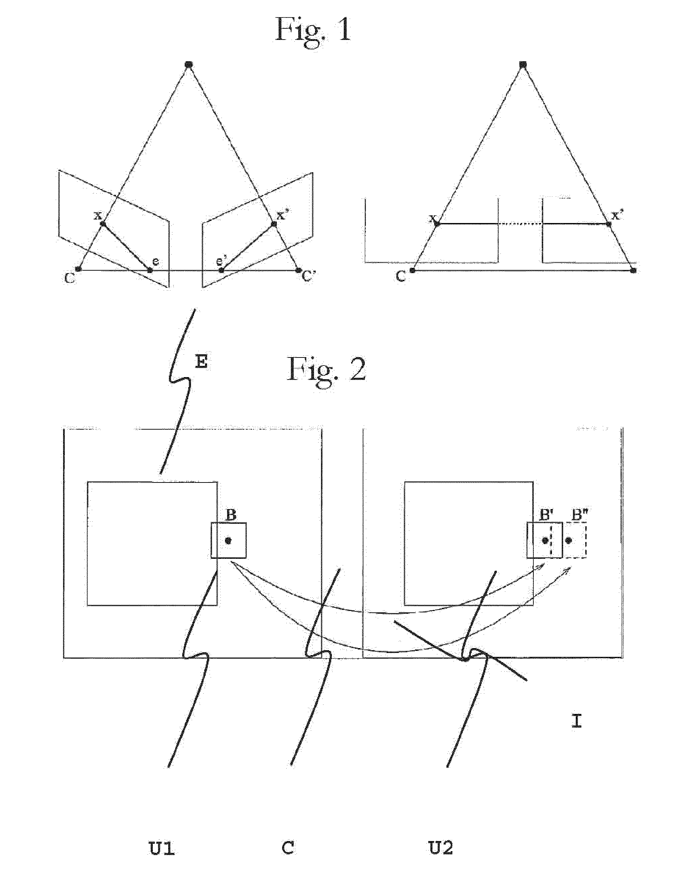

Initially, knowing the position of the cameras and their previous calibration allows positioning of the two images according to a stereo-rectified geometry, as can be observed in figure 1, which means that the two images are corrected by a homograph in such a manner that a point in the first image U1 has its corresponding point, **module** a small numerical error, on the same horizontal line of the other image U2.

Specifically, figure 1 shows a hypothetical starting point of the process, namely, that the images processed by the process of the invention are stereo-rectified.

On the left there are two cameras with optical centres C and C'. The two parallelograms represent the two images formed in the two cameras. The segment between C and C' is the baseline. Points **x** and **x'** are the projections of the aforementioned point on the two image planes, and are therefore equivalent points. Points **e** and **e'** are the points of intersection of the image planes with the baseline: they are the epipolar points.

For each point of the scene, the straight lines **(e, x)** and **(e', x')** are matched: they are the epipolar straight lines. The position of the image planes after stereo-rectification is shown on the right.

In the stereo-rectification process, the epipolar points are sent to infinity. All the epipolar straight lines become parallel and horizontal in each image.

In the description of the invention, it is assumed in general that the two images U1 and U2 have been positioned according to this epipolar geometry, in such a manner that a block around **x** in the image on the left is compared to all the blocks around the image on the right, on the same epipolar lines. This line is called the epipolar line of **x** in U2.

The **x** and **y** pixel colour or grey level values are not sufficiently discriminating for direct comparison. A block B1(**x**) of pixels must be compared, usually a square centred at **x**, with a block of the same shape B2(**y**) centred at **y**, point of U2 which belongs to the epipolar line of **x**, as indicated in figure 2.

Specifically, figure 2 shows two stereoscopic images with a fattening error. The disparity of the pixels of building **E** is different to that of the ground pixels. Block B, with its central pixel on the ground, also contains building pixels. The block of the other image that bears greater similarity to B is B', as it contains the contour of the building, which is sharply contrasted. For this reason, the central pixel of B is falsely aligned with the central pixel of B', which has the same disparity as the building pixels. The correct match of B would have been B".

Therefore, the selection of the corresponding point of **x** in U2 is point **y**, which minimises the distance d(B1, B2) between blocks B1(**x**) and B2(**y**). The height of **x** is then determined by calculating the parallax of the displacement m(**x**)=**y-x** of **x** in **y**.

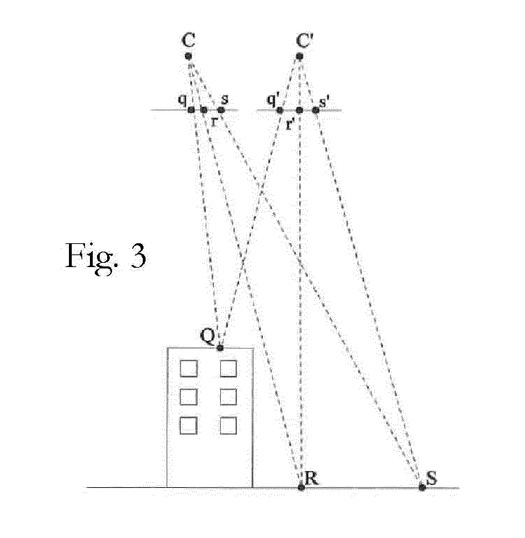

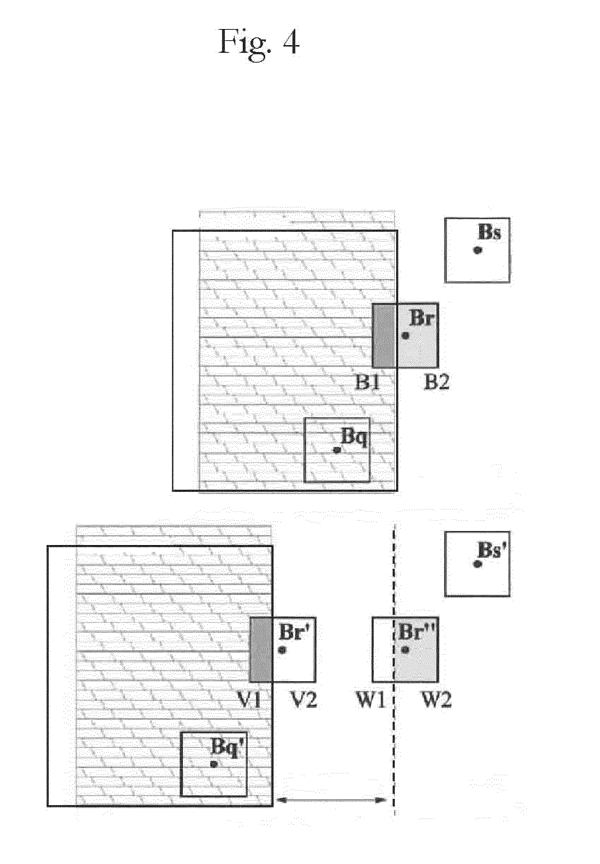

This parallax calculation quantitatively reflects the qualitative intuition that the greater the disparity between **x** and **y**, the closer to the camera the point of the scene X that is projected onto **x** on U1 and in **y** on U2, as can be observed in figures 3 and 4.

The fattening phenomenon is illustrated in this shot of a view of the building, whether aerial or taken by a satellite. The roof of the building is much brighter than the ground, due to which the blocks that include a portion of the roof have well-contrasted pixels. Therefore, matching of the blocks is determined by the roof, as explained with respect to figure 2.

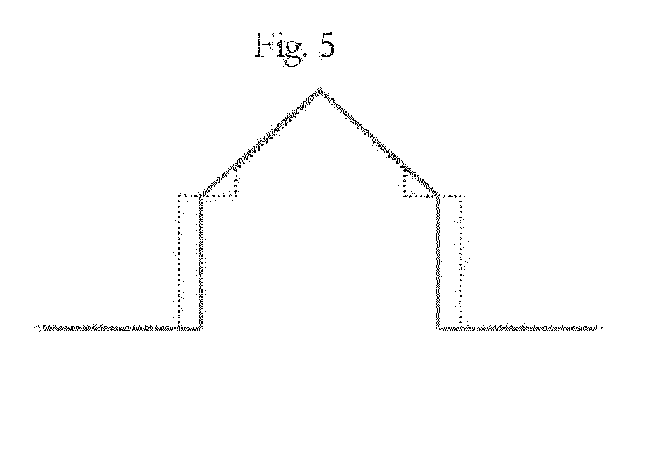

This gives rise to the "fattening" phenomenon: the correct disparity of point **r** should be **r"** but block **Br** is matched with B**r'**, the result of which is a relief such as that described by the dotted line of figure 5.

In this figure, the continuous line represents the profile of a house with a sloping roof. The dotted line represents the profile of the relief obtained, deformed by the fattening phenomenon.

This phenomenon occurs when the roof is in sharp colour contrast with the ground. Therefore, fattening causes expansion of the building and levelling of the interior of the roof.

The distance between the blocks of the different implementations proposed in existing literature is given either by the sum of squared colour differences, whether by the same quadratic difference after having normalised the averages of the two blocks or a correlation between the two blocks, which is equivalent to re-calculating the quadratic distance of the blocks divided by their respective Euclidian standards. This classic method of block matching based on distance minimisation has a defect commonly referred to as the "fattening effect", which occurs in all the aforementioned distances and even in other, more general distances. For a more detailed description of the problem, see the description provided by T. Kanade and M. Okutomi (1994) in "A stereo matching algorithm with an adaptive window: Theory and experiment", IEEE Transactions on Pattern Analysis and Machine Intelligence, 16,9 pages 920 to 932, 1994.

Although illustrated above by buildings, the fattening problem affects the entire image whenever there are two groups of points P1 and P2 at two different heights in block B1(**x**).

It often happens that group P1 contains points where U1 is well contrasted, while in group P2 the image U1 is less contrasted. In these conditions, matching based on distance minimisation between the colour values of the two blocks B1(**x**) and B2(**y**), distance where group P1 predominates, attributes the disparity of the points of P1 to the centre of block **x**. If **x** belongs to group P2, it is an error.

For example, in the case of an aerial image, the points of P1 can be located on the contrasted edge of a building. In this case, the height of the edge of this building is attributed to all points **x** such that the block centred at **x** intercepts the edge of the building, as can be observed in figures 2 and 3.

As a result, said fattening effect causes apparent expansion of the objects in the foreground and levelling of the sloping roofs around the edge thereof: this is known as the "fattening effect", which is shown as a dotted line in figure 5.

Following is a description of the different processes that avoid the fattening effect.

A first type of process consists of saving only those blocks B1(**x**) which are not located on the lines contrasted in image U1, thus avoiding the edges of actual objects which have ambiguous reliefs. An example of a process of this type is disclosed in A. Fusiello, and V. Roberto and E. Trueco, "Symmetric Stereo with Multiple Windowing", Journal of Pattern Recognition and Artificial Intelligence, 14,8, 2000.

In this selection process, the blocks that contain each pixel are considered and the block that contains it that bears the greatest similarity to a block in the other image is selected. Therefore, those blocks that do not have a significant difference in height are those generally selected and those blocks with sharp contrast lines (edges) are avoided.

A second type of process, based on the same principle, takes the form of comparison blocks B1(**x**), in such a manner that these blocks cannot find the contrasted lines of the image or in such a manner as to give the minimum quadratic distance, as disclosed, for example, in H. Hirschmuller, P.R. Innocent and J. Garibaldi "Actual-Time Correlation-Based Stereo Vision with Reduced Border Errors" - International Journal of Computer Vision, 2002.

This article proposes selecting the sub-blocks of a larger block having the least distance in relation to the blocks corresponding to the other image.

In this manner, a sub-block is adaptively inferred from each block, which generally excludes sharp contrast lines (edges).

Another example of this second type of process is disclosed in K. Wang, "Adaptive stereo matching algorithm based on edge detection", 2004 International Conference on Image Processing, Vol. 2 (18 April 2005), pages 1345-1348 Vol.2.

A third type of process only saves blocks having variable rectangular geometry in which the disparity is statistically consistent, as disclosed in the patent by T. Kanade and M. Okutomi, referenced above.

Finally, a fourth type of process consists of attributing the disparity of block B1(**x**) not to **x** but to the barycentre of the points of the block weighted according to their gradient, as disclosed by Bernard Rouge, "Appariement fin d'images stéréoscopiques et instrument dédié avec un faible coefficient stéréoscopique", French patent 2868168 filed on 30 September 2005.

Therefore, the object of the invention is to define a distance between blocks that avoids the fattening effect while maintaining a fixed comparison block shape that also allows comparison without exception of all the blocks of the image, attributing the disparity to the centre of the block while nevertheless avoiding the fattening effect.

**DESCRIPTION OF THE INVENTION**

To this end, the present invention is a process for matching a first digital image (U1) with a second digital image (U2) of the same scene to obtain disparities, which comprises the following stages:

a) select a block B1(**x**) of a specific shape from the first image (U1), centred at a pixel **x** of said first image (U1);

b) select a series of blocks B2(**y$_i$**) of the same specific shape from the second image (U2), each centred at a pixel **y$_i$** of the second image (U2);

c) calculate for each block B2(**y$_i$**) a distance between said block B2(**y$_i$**) and block B1(**x**), obtaining said distance as a sum in the block of a function of the differences between values associated to the colour of the pixels of the same relative position **z** in the blocks B1(**x**) and B2(**y$_i$**), said sum being weighted by a weighting function f(**x**,**z**);

d) select the pixel **y$_i$** for which the minimum distance is obtained between block B2(**y$_i$**) and block B1(**x**), thereby establishing a correspondence between said pixels **x** and **y$_i$**, and giving the disparity of **x** as the difference **y$_i$-x**, in such a manner that it is possible to calculate the distance of the point corresponding to pixel **x** from the camera using parallax;

**which is characterised** in that *f* depends on **x** and **z** and is a decreasing rather than constant function with respect to the modulus of the directional gradient of U1(**x+z**) in a certain direction.

In the preferred embodiment of the invention,

- the function f(**x,z**) corresponds to the following equation:

$$f(\mathbf{x,z}) = p(\mathbf{z})/U1'(\mathbf{x+z})^2$$

The inventors were able to verify that the selection between the distances weighted using a filter such as that claimed eliminates the fattening effect, obtaining reliefs without this effect and, therefore, more actualistic. More specifically, in the preferred embodiment of the invention it allows calculation, not of actual disparity, but rather of a filtered version thereof given by a linear convolution filter, the convolution nucleus p(z) of which may be established by the user.

In order to avoid several problems due to noise in the images and the cancellation of the derivative U1', a more general variant is considered by the invention when

- the function f(**x,z**) corresponds to the following equation:

$$f(\mathbf{x,z}) = p(\mathbf{z})/\max(U1'(\mathbf{x+z})^2, \mathbf{e})$$

where:

p(z) is a fixed weight function for all the blocks,
U1'(**x+z**) is the partial derivative of U1 at point **x+z** and in said certain direction and
**e** is a constant.

- another variant considered for the same reasons is when the function f(**x,z**) corresponds to the following equation:

$$f(\mathbf{x,z}) = p(\mathbf{z})/(U1'(\mathbf{x+z})^2 + \mathbf{e})$$

where:

p(**z**) is a fixed weight function for all the blocks,
U1'(**x+z**) is the partial derivative of U1 at point **x+z** and in said certain direction and
**e** is a constant.

- the certain direction is the epipolar direction.

- the function p(**z**) is a function the sum of values in the block B(**0**) of which is 1.

- more advantageously, in the process of the invention an additional minimisation stage is carried out if the distance between blocks is measured with arbitrary precision of less than one pixel by moving the image U2 along a path smaller than the size of a pixel.

- More generally, in the event that the epipolar geometry is inaccurate, or in the case that the scene photographed has temporary variations in shape, the search for $\mathbf{y}_i$ is performed along different lines of the image U2 and not only in the epipolar direction. This occurs, for example, when the photographs are of a planet with a changing surface relief or when the photographs are of a material subjected to pressures that deform it. In such case, parallax is irrelevant; what is important is the deformation of the object due to causes other than perspective.

- More preferably, it is a plurality of images of the same scene, comparing them two by two, for the purpose of obtaining multiple estimates of the disparity and, eventually, of the relief, which can subsequently be merged. These images can be obtained by means of two cameras disposed separately and facing the same scene, or a single camera that moves maintaining a substantially fixed general orientation.

- Even more preferably, stages a, b, c and d are repeated, but interchanging U1 and U2.

The process of the invention is preferably applicable to obtaining reliefs from images obtained by one or several planet-observing satellites.

More preferably, images U1 and U2 are obtained using one or more cameras connected to one or more computers configured to obtain approximate disparity values and calculate the relief of the scene observed using parallax. Finally, in the process of the invention images U1 and U2 are obtained as successive photographs of a physical scene that is deformed, and the disparity calculated measures the deformation of the scene between the two instants in which the photographs were taken.

## BRIEF DESCRIPTION OF THE DRAWINGS

In order to better understand the foregoing, drawings have been attached wherein, schematically and solely by way of non-limiting example, the technical problem solved by the invention is illustrated.

Figure 1 shows the initial stereo-rectification process.

Figure 2 shows two types of matches, a correct match C and an incorrect match I.

Figure 3 shows the positions relative to the points wherefrom the image is taken and from the central points of the blocks.

Figure 4 shows a top plan view of the relative positions of figure 3.

Figure 5 shows the difference between the actual relief and that obtained due to the fattening effect.

## <u>DESCRIPTION OF A PREFERRED EMBODIMENT</u>

Following is a description of a preferred embodiment of the process of the invention.

A calculation proves that the elimination of the fattening effect is optimum when the weighting function is $f(\mathbf{x}, \mathbf{z}) = p(\mathbf{z})/(U1'(\mathbf{x+z})^2)$, where $p(\mathbf{z})$ is a fixed weighting function, in such a manner that $f(\mathbf{x},\mathbf{z})$ is inversely proportional to the square of the directional gradient of U1 in the epipolar direction.

In this case, the following is obtained:

$$m(\mathbf{x}) = \text{SUM\_for\_}\mathbf{z}\text{\_in\_B(O)\_of } [p(\mathbf{z})a(\mathbf{x+z})],$$

i.e. the disparity calculated is the actual disparity between the two images, convoluted with the filter $p(\mathbf{z})$. Or, in other words, the disparity function $m(\mathbf{x})$ that minimises the distance between blocks at each point $\mathbf{x}$ of the image U1 is a weighted average of the actual disparity $a(\mathbf{x})$ values within the block $B1(\mathbf{x})$, the weights being fixed values $p(\mathbf{z})$. The weight function $p(\mathbf{z})$ defined for block B(O) can be chosen by the user.

The following notations have been used throughout the document:

U1($\mathbf{x}$): image 1, value of the image in $\mathbf{x}$. This value can be any vector value (grey level, colour,...).

U2($\mathbf{y}$): image 2, value of the image in y.

B(O): pixel block of a fixed shape, often square or rectangular, centred at the origin O(0,0). The block is typically a square, ranging from 3x3 to 16x16 in size, or a rectangle.

B1($\mathbf{x}$)=$\mathbf{x}$+B(O): block of a fixed shape, generally square, centred at $\mathbf{x}$, of the image U1.

B2($\mathbf{y}$)=$\mathbf{y}$+B(O) block of the same shape, centred at $\mathbf{y}$, of the image U2.

p($\mathbf{z}$): fixed weight function, defined for $\mathbf{z}$ at B(O).

The function

d(B1(**x**),B2(**y**)) = SUM_for_**z**_in_B(O)of[p(**z**)(U1(**x+z**)-U2(**y+z**))$^2$]: it is the sum of the squares of the differences between the values of image U1 in B1(**x**) and the corresponding values of image U2 in B2(**y**). These terms are weighted by the weighting function p(**z**). This inter-block distance function is classic.

U'(**x**): for an image U(**x**), wherein after stereo-rectification the horizontal lines are the epipolar lines, we identify the partial derivative of U(**x**) in the direction of the epipolar line as U'(**x**). This partial derivative can be calculated approximately using finite differences or exactly using the Discrete Fourier transform, under the classic hypothesis that the image is periodic and has a limited spectrum.

The function

f(**x,z**)=p(**z**)/U1'(**x+z**)$^2$: relates to the special weights proposed in the invention to avoid fattening. These weights in block B(**x**) depend on **x** and not only on **z** as in the classic methods.

The new inter-block distance function

d(B1(**x**),B2(**y**)) =SUM_for_**z**_in_B(O)of_[f(**x,z**)(U1(**x+z**)U2(**y+z**))$^2$]: with the preceding notations, is the distance function dependent on **x**, which allows selection by minimisation of point **y** of U2 corresponding to point **x** of U1. This point is **y** which, for fixed **x**, gives the minimum of d(B1(**x**),B2(**y**$_i$)) for all **y**$_i$ in the region surrounding the epipolar line.

Actual disparity: it is the unknown function a(**x**) defined in the domain of image U1, which is the physically correct disparity of image U1 in image U2, in such a manner that the following identity is fulfilled:

$$U1(\mathbf{x}+(\mathbf{a}(\mathbf{x}),0))= U2(\mathbf{x})$$

The basic relationship justified by the invention is given by the following theorem: if the weight function used previously to compare block B1(**x**) with blocks B2(**y**) is used, then the disparity m(**x**) with which the minimum of d(B1(**x**),B2(**y**)) is achieved verifies the following property:

$$m(\mathbf{x})=SUM\_for\_\mathbf{z}\_in\_B(O)\_of[p(\mathbf{z})to(\mathbf{x+z})]$$

In other words, the disparity m(**x**) calculated in **x** by the invention in its preferred implementation is a weighted average of the actual disparity in a fixed region of **x**, and with a weighting given by weights p(**z**) in the block, regardless of **x**, whereby the points of different images are optimally matched.

Description of complementary embodiments:

1. According to a first image acquisition method, the images are acquired by an observation satellite. The images are acquired by the same satellite, but at two different instants, giving rise to images U1 and U2 of the same scene from two different angles. In some satellites, the sensor consists of a rod detector and the image is acquired line by line as a result of the satellite's movement. Images U1 and U2 are created by linking successive lines.

2. According to a second image acquisition mode, the images are acquired by a camera mounted on an airborne medium. Said media can be, for example, unmanned aircraft, airplanes or balloons. The image can be acquired using a camera-type matrix sensor or a rod-type sensor such as those commonly used in satellites. Images U1 and U2 can also be acquired using two different media observing the same scene at a stereoscopic angle. Images U1 and U2 can also be acquired using two cameras installed to carry out the stereoscopic acquisitions on the same medium.

3. According to a third image acquisition method, the images are acquired using a camera mounted on a land or marine medium or carrier. The medium moves and the scene observed remains fixed. As in the case of the preceding embodiment method, images U1 and U2 can be acquired using one or more cameras mounted on the same medium or same media. The difference with the preceding embodiment is the matching or preparation of the images, which is not necessarily in infinity. The stereo-rectification method applies equally to images in which focalisation provides a non-constant flow on the image.

4. According to a fourth image acquisition method, the images are acquired using a fixed camera with a moving scene. The scene turns round upon itself. Images U1 and U2 are acquired from two different angles of the scene.

5. According to a fifth image acquisition method, the images are acquired using a fixed or mobile camera that follows the scene to be acquired. Images U1 and U2 are acquired in the same manner as in the case of the two different angles. This can be achieved using a stereo camera or by moving the same camera.

6. According to a sixth image acquisition method, the images are acquired using two cameras in different spectrum bands. Image U1, for example, is acquired in the near infrared (grey level), and image U2, for example, is acquired in colour (using the red component). The stereo-rectification method applies equally to images with different spectrum bands. In order to calculate the disparity map, the preferred strategy of the invention is to consider all the different spectrum bands to calculate the distance between the blocks.

7. According to a seventh image acquisition method, the images are acquired using two cameras with different spectrum bands. Images U1 and U2 are acquired in accordance with the available spectrum bands. The stereo-rectification method applies equally to images with different spectrum bands. In order to calculate the disparity map, the strategy is to firstly calculate the disparity on a band-by-band basis. In this calculation, the same spectrum band is used for image U1 and U2. The same number of disparity maps as spectrum bands are obtained. The final map is obtained by merging the intermediate disparity maps.

**Claims**

1. Process for matching a first digital image (U1) with a second digital image (U2) of the same scene to obtain disparities, which comprises the following stages:

   a) select from a first image (U1) a block B1($\mathbf{x}$) of a specific shape centred at a pixel $\mathbf{x}$ in said first image (U1);
   b) select from the second image (U2) a series of blocks B2($\mathbf{y_i}$) of the same specific shape as block B1($\mathbf{x}$), each centred at a pixel $\mathbf{y_i}$ of the second image (U2);
   c) calculate for each block B2($\mathbf{y_i}$) a distance between said block B2($\mathbf{y_i}$) and block B1($\mathbf{x}$), obtaining said distance as a sum in the block of a function of the differences between values associated to the colour of pixels having the same relative position $\mathbf{z}$ of blocks B1($\mathbf{x}$) and B2($\mathbf{y_i}$), said sum being weighted by a weighting function f($\mathbf{x,z}$);
   d) select pixel $\mathbf{y_i}$ for which the minimum distance is obtained between block B2($\mathbf{y_i}$) and block B1($\mathbf{x}$), thereby establishing the correspondence between said pixels $\mathbf{x}$ and $\mathbf{y_i}$, and giving the disparity of $\mathbf{x}$ as the difference $\mathbf{y_i}$-$\mathbf{x}$,

   **characterised in that** $f$ depends on $\mathbf{x}$ and $\mathbf{z}$ and is a decreasing and non-constant function with respect to the modulus of directional gradient of U1($\mathbf{x+z}$) in a certain direction.

2. Process, according to the preceding claim, wherein said function f($\mathbf{x,z}$) corresponds to the following equation:

$$f(\mathbf{x,z}) = p(\mathbf{z})/\max(U1'(\mathbf{x+z})^2, \mathbf{e})$$

   where:

   p($\mathbf{z}$) is a fixed weight function for all the blocks,
   U1'($\mathbf{x+z}$) is the partial derivative of U1 at point $\mathbf{x+z}$ and in said certain direction and
   $\mathbf{e}$ is a constant.

3. Process, according to claim **1**, wherein said function f($\mathbf{x,z}$) corresponds to the following equation:

$$f(\mathbf{x},\mathbf{z}) = p(\mathbf{z})/(U1'(\mathbf{x}+\mathbf{z})^2 + \mathbf{e})$$

where:

$p(z)$ is a fixed weight function for all the blocks,
$U1'(\mathbf{x}+\mathbf{z})$ is the partial derivative of U1 at point $\mathbf{x}+\mathbf{z}$ and in said certain direction and
$\mathbf{e}$ is a constant.

4. Process, according to any of the preceding claims, wherein said certain direction is the epipolar direction, in such a manner that the distance between the camera and the point corresponding to pixel $\mathbf{x}$ can be calculated using parallax.

5. Process, according to any of the preceding claims, wherein the function $p(\mathbf{z})$ is a positive function, the sum of values in block B($\mathbf{0}$) of which is 1.

6. Process, according to any of the preceding claims, wherein an additional stage of distance minimisation between blocks is carried out with arbitrary precision of less than one pixel by moving the image U2 along a path smaller than the size of a pixel.

7. Process, according to any of the preceding claims, wherein the search for $\mathbf{y}_i$ is performed along different lines of image U2.

8. Process, according to any of the preceding claims, wherein a plurality of images of the same scene are processed, comparing them two by two, for the purpose of obtaining multiple estimates of the relief, which can subsequently be merged.

9. Process, according to any of the preceding claims, wherein stages a, b, c and d are repeated, interchanging U1 and U2.

10. Process, according to any of the preceding claims, wherein images obtained by one or several satellites, balloons, airplanes and, in general, devices for observing celestial bodies (planet, asteroid, sun) are used.

11. Process, according to any of the preceding claims, wherein images obtained in different spectrum bands are used.

12. Process, according to any of the preceding claims, wherein images U1 and U2 are obtained using one or more cameras connected to one or more computers configured to obtain approximate disparity values and to infer the relief of the scene observed using parallax.

13. Process, according to any of the preceding claims, wherein images U1 and U2 are obtained as successive photographs of a physical scene that is deformed, and the disparity calculated measures the deformation between the two instants in which the photographs were taken.

# Fig. 1

# Fig. 2

Fig. 3

# Fig. 4

Fig. 5

# INTERNATIONAL SEARCH REPORT

| International application No. |
| --- |
| PCT/ES2010/070813 |

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
G06T, H04N, G02B

Documentation searched other than minimum documentation to the extent that such documents are included in the fields searched

Electronic data base consulted during the international search (name of data base and, where practicable, search terms used)

EPODOC, INVENES, WPI

C. DOCUMENTS CONSIDERED TO BE RELEVANT

| Category* | Citation of document, with indication, where appropriate, of the relevant passages | Relevant to claim No. |
| --- | --- | --- |
| A | WO 2007072102 A1 (TELECOM ITALIA SPA ET AL.) 28/06/2007, | 1 |
| A | US 2005129325 A1 (WU WEIGUO ) 16/06/2005, | 1 |
| A | EP 1610271 A2 (ST MICROELECTRONICS INC ) 28/12/2005, | 1 |
| A | WO 9119265 A1 (EUROP VISION SYST CENTRE ) 12/12/1991, | 1 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search 04/04/2011 | Date of mailing of the international search report **(19/04/2011)** |
| --- | --- |
| Name and mailing address of the ISA/ OFICINA ESPAÑOLA DE PATENTES Y MARCAS Paseo de la Castellana, 75 - 28071 Madrid (España) Facsimile No.: 91 349 53 04 | Authorized officer M. González Vasserot Telephone No. 91 3493087 |

Form PCT/ISA/210 (second sheet) (July 2009)

## INTERNATIONAL SEARCH REPORT

Information on patent family members

International application No.

PCT/ES2010/070813

| Patent document cited in the search report | Publication date | Patent family member(s) | Publication date |
|---|---|---|---|
| WO2007072102 A | 28.06.2007 | EP1964412 A | 03.09.2008 |
| | | EP20050826173 | 21.12.2005 |
| | | CN101347000 A | 14.01.2009 |
| | | CN101347000 B | 01.09.2010 |
| | | JP2009520975 T | 28.05.2009 |
| | | US2010215248 A | 26.08.2010 |
| US2005129325 A | 16.06.2005 | KR20050051554 A | 01.06.2005 |
| | | JP2005157921 A | 16.06.2005 |
| | | JP4069855B2 B | 02.04.2008 |
| | | CN1678084 A | 05.10.2005 |
| | | CN100584040 C | 20.01.2010 |
| EP1610271 A | 28.12.2005 | EP20050253466 | 06.06.2005 |
| | | US2005286756 A | 29.12.2005 |
| | | US7330593 B | 12.02.2008 |
| WO9119265 A | 12.12.1991 | GB2244621 A | 04.12.1991 |
| | | AU7989991 A | 31.12.1991 |
| | | EP0551274 A | 21.07.1993 |
| | | EP19910910391 | 29.05.1991 |
| | | US5432712 A | 11.07.1995 |

Form PCT/ISA/210 (patent family annex) (July 2009)

## INTERNATIONAL SEARCH REPORT

International application No.

PCT/ES2010/070813

CLASSIFICATION OF SUBJECT MATTER

*G06T7/00* (2006.01)
*H04N13/00* (2006.01)
*G02B27/22* (2006.01)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2868168

**Non-patent literature cited in the description**

- **T. KANADE ; M. OKUTOMI.** A stereo matching algorithm with an adaptive window: Theory and experiment. *IEEE Transactions on Pattern Analysis and Machine Intelligence,* 1994, vol. 16 (9), 920-932
- **A. FUSIELLO ; V. ROBERTO ; E. TRUECO.** Symmetric Stereo with Multiple Windowing. *Journal of Pattern Recognition and Artificial Intelligence,* 2000, vol. 14, 8
- **H. HIRSCHMULLER ; P.R. INNOCENT ; J. GARIBALDI.** Actual-Time Correlation-Based Stereo Vision with Reduced Border Errors. *International Journal of Computer Vision,* 2002
- **K. WANG.** Adaptive stereo matching algorithm based on edge detection. *2004 International Conference on Image Processing,* 18 April 2005, vol. 2, 1345-1348